# EUROPEAN PATENT SPECIFICATION

(11) **EP 2 301 730 B1**
(45) Date of publication and mention of the grant of the patent: **19.09.2012**
(21) Application number: 10010817.4
(22) Date of filing: 27.09.2010
(51) Int. Cl.: B26D 1/26, B23P 6/00, C23C 4/18, F01D 5/00, F01D 5/18

(54) **Hole drilling with close proximity backwall**
Lochbohrung in der Nähe einer Rückwand
Perçage de trou près de face arrière de proximité

(30) Priority: 25.09.2009 US 566771
(43) Date of publication of application: 30.03.2011
(73) Proprietor: United Technologies Corporation, Hartford, CT 06101 (US)
(72) Inventor: Raji, Edris, Tolland, CT 06084 (US); Barry, Thomas M., East Hartford, CT 06424 (US)
(74) Representative: Leckey, David Herbert

(56) References cited:
- EP-A1- 1 859 896
- EP-A2- 1 424 525
- EP-A2- 2 123 788
- US-B1- 6 544 346

## Description

### BACKGROUND

The present invention relates generally to drilling of holes in components utilizing water jet cutting, and, more particularly, to drilling through a coating on a component with a close proximity backwall utilizing water jet cutting.

Various components of gas turbine engines, such as combustion liners and augmentors, often require a complex cooling scheme in which cooling air flows through the component and is then discharged through carefully configured cooling holes in the outer wall of the component and/or its associated structures. The performance of a turbine component is directly related to the ability to provide uniform cooling of its external surfaces. Consequently, control of cooling hole size and shape is critical in many turbine engine component designs, because the size and shape of the opening determines the amount of flow exiting a given opening, its distribution across the surface of the component, and the overall flow distribution within the cooling circuit that contains the opening. Other factors, such as back flow margin (the pressure differential between the cooling air exiting the cooling holes and working gases impinging on the component) are also affected by variations in opening size.

Components located in certain sections of gas turbine engines, such as the turbine, combustor and augmentor, are often thermally insulated with a ceramic layer in order to reduce their service temperatures, which allows the engine to operate more efficiently at higher temperatures. These coatings, often referred to as thermal barrier coatings (TBC), must have low thermal conductivity, strongly adhere to the article, and remain adherent throughout many heating and cooling cycles.

Conventional aperture creation techniques include laser machining and electrical-discharge machining (EDM). These techniques yield components with dimensionally correct openings in order to repeatably control opening size, but are expensive to obtain, operate, and maintain in manufacturing. Further, additional considerations must be accounted for when creating apertures through a part that contains a coating, such as ceramic. Care must be taken in creating apertures so as not to damage the coating. Additionally, some coatings inhibit certain cutting techniques, such as EDM that requires electrical contact for optimal operation.

Components that are constructed of a single substrate with a coating such as a TBC can be manufactured by processes utilizing laser machining, EDM, and water jet cutting and drilling.

On these components, the drilling is done from the substrate side of the components, which allows for the cutting processes to break through the coating. However, in a part with a close proximity backwall to a coated substrate, such a process is not possible as the cutting head or tool of the machine can not be positioned to contact the substrate first in the manufacturing process. Thus, to utilize typical machining processes, the cutting head or tool contacts the coating first.

US 6,544,346 discloses a method of removing a ceramic layer within coating holes of a turbine blade. A jet of water of a pressure between 138000 and 413000 kpa is directed to the holes from the coating side to overcome the compressive stresses anchoring the ceramic in the hole.

### SUMMARY

The invention provides a method according to claim 1.

A method of creating cooling holes in a component is disclosed. A substrate is provided and a plurality of apertures is created in the substrate. A backwall is attached adjacent to the substrate. A coating is applied to the substrate on a first surface opposite a second surface that faces the backwall. The coating is removed from the plurality of apertures. The removal process does not damage the backwall adjacent the substrate.

### BRIEF DESCRIPTION OF THE DRAWINGS

FIG. 1 is a perspective view of a water jet drill apparatus.
FIG. 2 is a cross-sectional view of a substrate with apertures formed therein.
FIG. 3 is a cross-sectional view of a backwall attached to the substrate.
FIG. 4 is a cross-sectional view of a coating applied to the assembly of FIG. 5.
FIGS. 5 and 6 are cross-sectional views of the coating being removed to create apertures in the coating.
FIG. 7 is a cross-sectional view of a completed coated component with a close proximity backwall.

### DETAILED DESCRIPTION

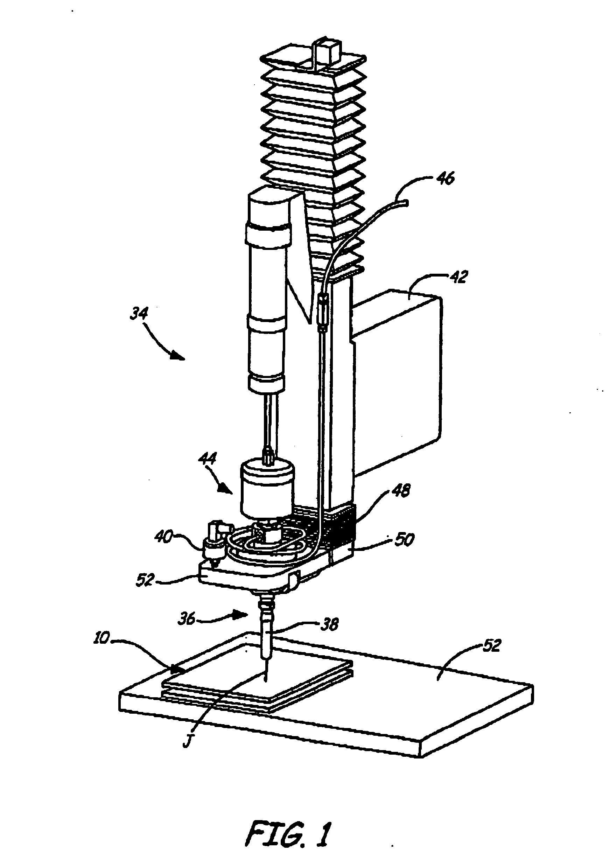

FIG. 1 is a perspective view of a fluid jet cutting system 34 that includes cutting head 36 with nozzle 38 coupled to mount assembly 44. Illustrated are workpiece 10, cutter head 36, nozzle 38 with jet J, sensor 40, drive assembly 42, mount assembly 44 with lower portion 48, fluid conduit 46, mounting arm 50, and fixture table 52. Mount assembly 44 is driven by a control having a drive assembly 42 that positions nozzle 38 throughout an x-y Cartesian plane that is substantially parallel to the surface of workpiece 10. Drive assembly 42 may include a pair of drives oriented along the x and y axes and a pair of electric drive motors to provide motion along the x and y axes. Alternately, drive assembly 42 may include a multi-axis motion system. Drive assembly 42 may move either cutting heat 36 or fixture table 52 (or both) to produce relative movement of nozzle 38 with respect to workpiece 10.

Cutting head 36 with nozzle 38 is connected to a fluid inlet coupled to a fluid source, such as a high-pressure pressure pump, by fluid conduit 46. Mount assembly 44 includes mounting arm 50 having an aperture disposed therethrough for reception of nozzle 38 and the associated mounting hardware. The back side of mounting arm 50 is coupled to a lower portion 48 of the control gantry of mount assembly 44 and drive assembly 42. Nozzle 38 is secured within a mounting aperture of mounting arm 50.

In operation, the fluid, which is typically water, from fluid source enters the fluid inlet and travels through fluid conduit 46, and exits from nozzle 38 toward the workpiece 10 as a cutting jet J. Cutting jet J pierces workpiece 10 and performs the desired cutting. Workpiece 10 is secured to a fixture on table 52. Using drive assembly 42, cutting head 36 with nozzle 38 is traversed across workpiece 10 in the desired direction or pattern based on the known position of workpiece 10 fixtured on table 52. Alternatively, table 52 moves to position workpiece 10 with respect to cutting jet J from nozzle 38. Sensor 40 is disposed adjacent nozzle 38, which slides along or slightly above the surface of workpiece 10. Sensor 40 indicates the relative height of workpiece 10, as well as monitors the fluid of cutting jet J to indicate breakthrough of cutting jet J through workpiece 10. The machine is controlled through automated programs, such as a computer numerical controlled (CNC) program.

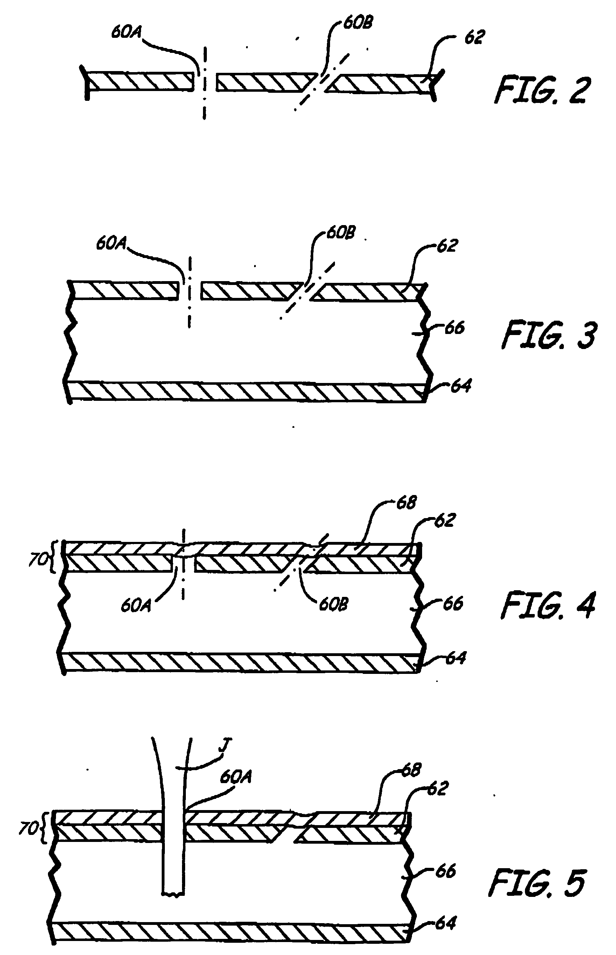

Fluid jet cutting system 34 may be utilized in a process for cutting and drilling apertures in a coated component with a close proximity backwall. To start the process, a substrate layer is formed. FIG. 2 is a cross-sectional view of substrate 62. Substrate 62 is constructed from a sheet of metal or metal alloy. In one embodiment, substrate 62 is a light weight, high temperature alloy, while in another embodiment substrate 62 is a high temperature alloy such as a nickel cobalt or iron superalloy. The thickness of substrate 62 may vary, and in one embodiment is between 1mm and 2mm.

Apertures 60A and 60B are fabricated into substrate 62, and may be cooling holes of workpiece 10. Apertures may be made by any drilling or cutting manufacturing process known in the art, such as laser cutting, plasma cutting, water jet cutting, electrical discharge machining (EDM), mechanical drilling or machining with a bit, or formed by a punch press. Apertures 60A and 60B may contain differing cross-sectional profiles including circles and ovals, as well as any other profile that is demanded for adequate fluid flow for cooling of the component. For example, aperture 60A may be a circular hole with a diameter of between .25mm to 1.00mm. As illustrated, aperture 60A is perpendicular to substrate 62, while aperture 60B has been cut at an angle to substrate 62.

After creating apertures in substrate 62, backwall 64 is added. FIG. 3 is a cross-sectional view of substrate 62 with backwall 64 to create fluid channel 66. Fluid channel 66 acts as a pressure plenum and will receive a cooling fluid that will exit apertures 60A and 60B to cool the component. Backwall 64 is constructed from the same or similar materials as substrate 62. Backwall 64 is attached to substrate 62 by methods common in the art, such as welding, brazing, fastening, or similar processes that secure backwall 64 with respect to substrate 62. Backwall 64 is in close proximity to substrate 64. Close proximity may be defined as a distance between backwall 64 and substrate 62 such that a cooling fluid may adequately flow through the channel between backwall 64 and substrate 62, but cutting head 36 and nozzle 38 can not be positioned between backwall 64 and substrate 62 to obtain a desired cut from cutting jet J through substrate 62. In one embodiment, substrate 62 is less than 5.00 cm from backwall 64, while in another embodiment backwall 64 is spaced less than 1.00 cm from substrate 62. Thus, apertures are pre-existing in substrate 62 prior to sealing off fluid channel 66 with backside 64. In an alternate embodiment, backwall 64 may also contain apertures for the discharge of cooling fluid on the opposite side of the component.

FIG. 4 illustrates coating 68 applied to substrate 62 to create outer layer 70 of the component workpiece 10. Coating 68 may be a thermal barrier coating or ceramic overlay on substrate 62. In one embodiment, coating 68 includes a metallic bond coat that adheres the thermal-insulating ceramic layer to substrate 62, forming a TBC system. Metal oxides, such as zirconia (ZrO₂) partially or fully stabilized by yttria (Y₂O₃₎, magnesia (MgO) or other oxides, are commonly used as the materials for TBCs. Coating 68 is typically deposited by air plasma spraying (APS), low pressure plasma spraying (LPPS), or a physical vapor deposition (PVD) technique, such as electron beam physical vapor deposition (EBPVD). Coating 68 may contain a bond coat applied prior to the ceramic coat. Bond coats are typically formed of an oxidation-resistant diffusion coating such as a diffusion aluminide or platinum aluminide, or an oxidation-resistant alloy such as MCrAlY (where M is iron, cobalt and/or nickel). The thickness of coating 16 will vary with the insulating requirements of the component, and in exemplary embodiments has a thickness of between .25mm and .50mm thick. Larger components may require coating 68 to be thicker, such as up to 1 mm thick.

In certain applications, coating 68 must be applied after attaching backwall 64 to substrate 62. For example, in a turbine engine augmentor liner, backwall 64 is brazed to substrate 62 utilizing temperatures of over 900° C. At this temperature, a ceramic coating may be damaged if the coating has been applied to the substrate prior to the joining process. Thus, coating 68 is applied after joining of backwall 64 to substrate 62.

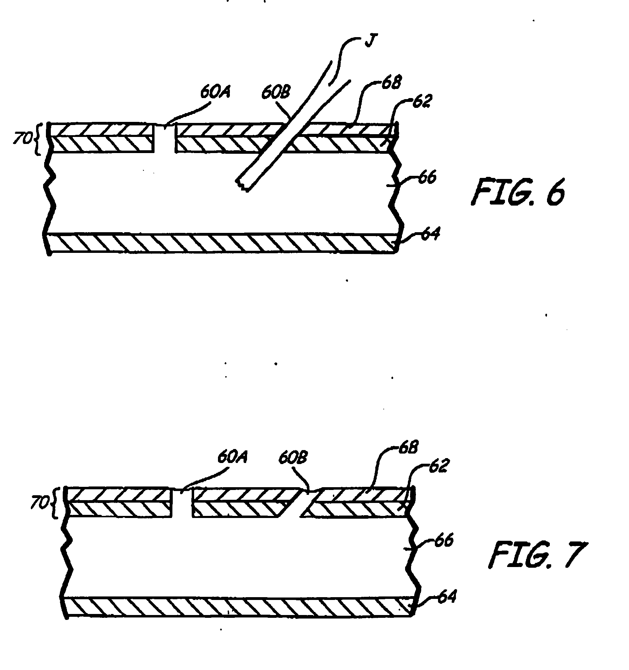

FIG. 5 is a cross-sectional view of coating 68 being removed to create aperture 60A, and FIG. 6 is a cross-sectional view of coating 68 being removed to create aperture 60B in coating 68. Aperture 60A is being created by fluid jet J that is perpendicular to outer layer 70, while aperture 60B is created by fluid jet J that is oriented at an angle with respect to outer layer 70. Cutting jet J is created by fluid jet cutting system 34 described with respect to FIG. 3.

While it is known to modify a waterjet to contain an abrasive particulates (i.e., essentially nonspherical particles with sharp corners and edges), practice has shown that the erosion and abrasion caused by abrasive particles in a water jet at pressures adequate to remove a ceramic deposit can severely damage the cooling hole and the surrounding component surface. In addition, abrasive materials in an abrasive fluid jet fracture to the point where the abrasive particulates cannot be reused or are difficult to separate from the material removed by the jet. As a result, the spent abrasive fluid must be disposed of, which adds unwanted cost to the process. Conventional water jet drilling is primarily performed on structures that do not have a shallow drop through region to a backwall. This is due to the physical limitations of being able to stop the drilling jet with particulate matter before the jet hits the opposing surface of the backwall. Cutting jet J may be water or similar fluid, and is substantially free from particulate material. That is, no particulate material is intentionally added to the fluid of cutting jet J. In some embodiments, ordinary tap water, distilled water, or de-ionized water are utilized as jet J without the addition of any other additives, making cutting jet J substantially free of particulate material. Fluid cutting jet J does not contain any abrasive particulates, but may contain other fluid additives. This prevents foreign object damage associated with adding abrasive particulates to the fluid prior to the cutting process, as well as prevents the need for extra steps to remove the particulate matter from channel 66.

The cutting process may be done at a much lower pressure than would be required if cutting the aperture through the entire outer layer 70 including coating 68 and substrate 62. The fluid cutting jet J may have a velocity sufficient to remove coating 68 overlying the cooling holes without damaging the cooling holes, substrate, or the backwall. Pressures below 70,000 kPa may be utilized. Utilizing lower fluid pressure saves energy input, as well as prevents cracking and chipping of the coating adjacent the apertures that may occur at higher pressures.

Cutting jet J is used to remove material until breakthrough is detected by sensor 40 of water jet cutting system 34. Sensor 40 may be an acoustic breakthrough detection sensor that is common in the industry. During the cutting process, there is no blocking of the cutting stream. This is due in part to the close proximity of backwall 64 which inhibits the use of a backing insert, which is difficult to install and remove. Upon breathrough, the fluid flow to the cutting jet is turned off and the jet dissipates. No damage is done to backwall 64, which may be done if utilizing other processes such as laser drilling or mechanical machining, as cutting jet J does not contain force to damage backwall 64 absent particulate material. Due to the absence of abrasive material in fluid jet J, no damage is done to backwall 64 and there is no additional flushing of the part required to remove the abrasive material from fluid channel 66.

Coating 68 is applied over substrate 62 that contains pre-existing apertures 60A and 60B. If coating 68 were applied to a substrate without apertures, the coating would be formed as a matrix in compression. With the apertures 60A and 60B in substrate 62, coating 68 is in tension over apertures 60A and 60B. Coating 68 in tension is much easier to remove, and less pressure and force is required for the cutting process. Thus, if utilizing a water jet cutting process, no additional particulate material is required within cutting jet J to remove coating 68 Elimination of the particulate additive is a great cost saver in the production of the component.

The removal of coating 68 is done starting with coating 68, and not through substrate 62. The position of backwall 64 inhibits the proper positioning of removal equipment adjacent the uncoated side of substrate 62. In one embodiment, apertures 60A and 60B are created with the apparatus of fluid jet cutting system 34. After backwall 64 and coating 68 have been secured to substrate 62, the same apparatus is used to remove coating 68 from apertures 60A and 60B. This allows the same machine to be used without reprogramming the controls of the machine, and allows utilizing the same fixture for the component.

FIG. 7 is a completed component utilizing the above mentioned process. Workpiece 10 contains an outer layer 70 that has coating 68 on substrate 62 and backwall 64. Outer layer 70 and close proximity backwall 64 create fluid channel 66 that will provide a pathway for cooling fluid of the component. Outer layer 70 has apertures 60A and 60B that allow for the discharge of the cooling fluid from fluid channel 66 to cool the component. Workpiece 10 may be any fabricated component that required film cooling apertures, contains a coating, and has a close proximity backwall. In an exemplary embodiment, workpiece 10 is a fabricated exhaust augmentor or combustion liner for a turbine engine.

The process disclosed herein may be utilized with any component that has cooling holes and a close proximity backwall. For example, in one embodiment, coating 68 may be a slag or recast layer remaining from another manufacturing procedure, such as a recast layer from laser drilling. The fluid jet may then be utilized to remove this recast layer. The fluid jet can be low pressure and does not require the addition of particulate material, such as garnet, to perform the cutting operation. Further, a cutting process with a low pressure fluid without particulate additives will only remove coating 68. Absent higher pressure and abrasive materials, the cutting process will not expand the size of apertures 60A and 60B which may lead to a part being outside the range of specifications for the component.

The disclosure herein allows for the process of creating a coated component with film cooling holes. In one embodiment, a method of making a coated component with a close proximity backwall is achieved by applying a coating to a pre-existing workpiece that contains a substrate with a plurality of apertures. The substrate is in close proximity to a backwall to form a cooling channel such that the proximity of the backwall to the substrate prevents the operation of a fluid jet within the cooling channel. The coating is removed from the plurality of apertures with a fluid jet cutting system. The fluid jet cutting system has a fluid jet without a particulate material added thereto.

In an alternate embodiment, a method of creating cooling holes in a component is disclosed. A substrate is provided and a plurality of apertures is created in the substrate. A backwall is attached adjacent to the substrate. A coating is applied to the substrate on a first surface opposite a second surface that faces the backwall. The coating is removed from the plurality of apertures. The removal process does not damage the backwall adjacent the substrate.

In yet another embodiment, a method of creating cooling holes in a component starts with providing a substrate with a plurality of apertures. A backwall is attached adjacent to the substrate, and a coating is applied to the substrate on a first surface opposite a second surface that faces the backwall to create a coated component. The coated component is secured in fixture on a fluid jet apparatus with a moveable and programmable portion, which may be the mount assembly or the fixturing table, and a nozzle directs a fluid jet for material removal. The coating previously applied is removed from the plurality of apertures with a fluid jet that is essentially of water. Additionally, the breakthrough of the fluid jet through the coating may be detected, and fluid flow to the fluid jet is stopped based on the detection.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method comprising:
providing a substrate (62) with a plurality of apertures (60A,60B);
attaching a backwall (64) spaced from the substrate (62) so that a first surface of the substrate (62) faces away from the backwall (64) and a second surface of the substrate (62) faces the backwall (64);
applying a coating (68) on the first surface of the substrate (62); and
removing the coating (68) from the plurality of apertures (60A,60B) with a fluid jet (J) directed toward the first surface, wherein the fluid jet (J) does not exceed 70,000 kPa during the removing of the coating (70) and is substantially free of particulate material.

2. The method of claim 1, wherein a workpiece (10) contains said substrate (62), the substrate (62) being in close proximity to said backwall (64) to create a cooling channel (66).

3. The method of claim 1 wherein the fluid jet (J) has a velocity that does not damage the backwall (64) during the removing of the coating (70).

4. The method of any preceding claim wherein the workpiece (10) is a turbine engine augmentor liner.

5. The method of claim 1 wherein removing the coating (68) is done with the fluid jet (J) that has a velocity sufficient to remove the coating (68) overlying the apertures (60A,60B) without damaging the apertures (60A,60B), substrate (62), or the backwall (64).

6. The method of claim 5 further comprising:
detecting the breakthrough of a fluid jet (J) of the fluid jet cutting apparatus through the coating (68); and
stopping fluid flow to the fluid jet (J) based on detection of the breakthrough.

7. The method of claim 5 or 6 wherein creating the plurality of apertures 5 (60A,60B) is done with the fluid jet cutting apparatus.

8. The method of any preceding claim wherein the backwall (64) is less than 5.00 cm from the substrate (62).

9. The method of any preceding claim wherein the coating (68) is a thermal barrier coating.

10. The method of any preceding claim wherein the coating thickness is less than 1mm.

11. The method of claim 1, wherein:
said fluid jet (J) is comprised essentially of water; and
the fluid jet (J) has a velocity sufficient to remove the coating (68) overlying the cooling holes without damaging the cooling holes (60A,60B), substrate (62), or the backwall (64).

12. The method of claim 12 further comprising:
securing the coated component in fixture on a fluid jet apparatus with a movable and programmable portion that positions a nozzle that directs a fluid jet (J) for material removal.

13. The method of any of claims 1 to 4, or 12 further comprising:
detecting the breakthrough of the fluid jet (J) through the coating (68); and
stopping fluid flow to the fluid jet (J) based on detection of the breakthrough.

## Patentansprüche

1. Verfahren aufweisend:
Bereitstellen eines Substrats (62) mit einer Mehrzahl von Öffnungen (60A, 60B);
Anbringen einer Rückwand (64) dergestalt von dem Substrat (62) beabstandet, dass eine erste Oberfläche des Substrats (62) von der Rückwand (64) wegweist und eine zweite Oberfläche des Substrats (62) zu der Rückwand (64) hinweist:
Auftragen einer Beschichtung (68) auf die erste Oberfläche des Substrats (62); und
Entfernen der Beschichtung (68) von der Mehrzahl von Öffnungen (60A, 60B) mit einem Fluidstrahl (J), der auf die erste Oberfläche gerichtet ist, wobei der Fluidstrahl (J) während des Entfernens der Beschichtung (70) 70.000 kPa nicht überschreitet und im wesentlichen frei von Teilchenmaterial ist.

2. Verfahren nach Anspruch 1, bei dem ein Werkstück (10) das Substrat (62) enthält, wobei das Substrat (62) der Rückwand (64) nahe benachbart ist, um einen Kühlkanal (66) zu erzeugen.

3. Verfahren nach Anspruch 1, bei dem der Fluidstrahl (J) eine Geschwindigkeit hat, die während des Entfernens der Beschichtung (70) die Rückwand (64) nicht beschädigt.

4. Verfahren nach einem vorangehenden Anspruch, bei dem das Werkstück (10) eine Turbinenmaschinen-Nachbrvnnerauskleidung ist.

5. Verfahren nach Anspruch 1, bei dem das Entfernen der Beschichtung (68) mit dem Fluidstrahl (J) durchgeführt wird, der eine ausreichende Geschwindigkeit hat, um die über den Öffnungen (60A, 60B) liegende Beschichtung (68) zu entfernen ohne die Öffnungen (60A, 60B), das Substrat (62) oder die Rückwand (64) zu beschädigen.

6. Verfahren nach Anspruch 5, außerdem aufweisend
Feststellen des Durchbruchs eines Fluidstrahls (J) der Fluidstrahl-Schneidevorrichtung durch die Beschichtung (68); und
Beenden des Fluidflusses zu dem Fluidstrahl (J) auf der Basis der Feststellung des Durchbruchs.

7. Verfahren nach Anspruch 5 oder 6, bei dem das Erzeugen der Mehrzahl von Öffnungen (60A, 60B) mit der Fluidstrahl-Schneidevorrichtung durchgeführt wird.

8. Verfahren nach einem vorangehenden Anspruch, bei dem sich die Rückwand (64) weniger als 5,00 cm von dem Substrat (62) entfernt befindet.

9. Verfahren nach einem vorangehenden Anspruch, bei dem die Beschichtung (68) eine Wärmebarrierebeschichtung ist.

10. Verfahren nach einem vorangehenden Anspruch, bei dem die Beschichtungsdicke weniger als 1 mm ist.

11. Verfahren nach Anspruch 1, bei dem:
der Fluidstrahl (J) im wesentlichen aus Wasser besteht; und
der Fluidstrahl (J) eine ausreichende Geschwindigkeit hat, um die über den Kühllöchern liegende Beschichtung (68) zu entfernen ohne die Kühllöcher (60A, 60B), das Substrat (62) oder die Rückwand (64) zu beschädigen.

12. Verfahren nach Anspruch 12, außerdem aufweisend:
Befestigen der beschichteten Komponente in einer Halterung auf einer Fluidstrahl-Vorrichtung mit einem beweglichen und programmierbaren Teil, der eine Düse positioniert, die einen Fluidstrahl (J) zur Materialentfernung lenkt.

13. Verfahren nach einem der Ansprüche 1 bis 4, 11 oder 12, außerdem aufweisend:
Feststellen des Durchbruchs des Fluidstrahls (J) durch die Beschichtung (68); und
Beenden des Fluidflusses zu dem Fluidstrahl (J) auf der Basis der Feststellung des Durchbruchs.

## Revendications

1. Procédé comprenant les étapes consistant à ;
fournir un substrat (62) avec une pluralité d'ouvertures (60A, 60B) ;
attacher une paroi arrière (64) espacée du substrat (62) de telle sorte qu'une première surface du substrat (62) soit détournée de la paroi arrière (64) et qu'une deuxième surface du substrat (62) soit en regard de la paroi arrière (64) ;
appliquer un revêtement (68) sur la première surface du substrat (62) ; et
enlever le revêtement (68) de la pluralité d'ouvertures (60A, 60B) avec un jet de fluide (J) dirigé vers la première surface, le jet de fluide (J) ne dépassant pas 70 000 kPa au cours de l'enlèvement du revêtement (70) et étant substantiellement exempt de matière particulaire.

2. Procédé selon la revendication 1, dans lequel une pièce à usiner (10) contient ledit substrat (62), le substrat (62) étant à proximité immédiate de ladite paroi arrière (64) pour créer un canal de refroidissement (66).

3. Procédé selon la revendication 1, dans lequel le jet de fluide (J) a une vitesse qui n'endommage pas la paroi arrière (64) au cours de l'enlèvement du revêtement (70).

4. Procédé selon l'une quelconque des revendications précédentes, dans lequel la pièce à usiner (10) est une chemise de postcombusteur de moteur à turbine.

5. Procédé selon la revendication 1, dans lequel l'enlèvement du revêtement (68) est effectué avec le jet de fluide (J) qui a une vitesse suffisante pour enlever le revêtement (68) recouvrant les ouvertures (60A, 60B) sans endommager les ouvertures (60A, 60B), le substrat (62) ou la paroi arrière (64).

6. Procédé selon la revendication 5, comprenant en outre les étapes consistant à :
détecter le passage d'un jet de fluide (J) de l'appareil de coupe à jet de fluide à travers le revêtement (68) ; et
arrêter le flux de fluide vers le jet de fluide (J) à la détection de la traversée.

7. Procédé selon la revendication 5 ou 6, dans lequel la création de la pluralité d'ouvertures (60A, 60B) est effectuée avec l'appareil de coupe à jet de fluide.

8. Procédé selon l'une quelconque des revendications précédentes, dans lequel la paroi arrière (64) est à moins de 5,00 cm du substrat (62).

9. Procédé selon l'une quelconque des revendications précédentes, dans lequel le revêtement (68) est un revêtement de barrière thermique.

10. Procédé selon l'une quelconque des revendications précédentes, dans lequel l'épaisseur du revêtement est inférieure à 1 mm.

11. Procédé selon la revendication 1, dans lequel :
ledit jet de fluide (J) est constitué essentiellement d'eau ; et
le jet de fluide (J) a une vitesse suffisante pour enlever le revêtement (68) recouvrant les trous de refroidissement sans endommager les trous de refroidissement (60A, 60B), le substrat (62) ou la paroi arrière (64),

12. Procédé selon la revendication 11, comprenant en outre l'étape consistant à :
fixer le composant revêtu dans une fixation sur un appareil à jet de fluide avec une portion mobile et programmable qui positionne une buse qui oriente un jet de fluide (J) en vue de l'enlèvement de matière.

13. Procédé selon l'une quelconque des revendications 1 à 4, 11 ou 12, comprenant en outre les étapes consistant à :
détecter le passage du jet de fluide (J) à travers le revêtement (68) ; et
arrêter le flux de fluide vers le jet de fluide (J) à la détection de la traversée,
